# EUROPEAN PATENT SPECIFICATION

(11) **EP 1 847 564 B1**
(45) Date of publication and mention of the grant of the patent: **24.11.2010**
(21) Application number: 06711461.1
(22) Date of filing: 06.01.2006
(51) Int. Cl.: C08L 9/00, A63B 37/00

(54) **RUBBER COMPOSITION AND GOLF BALL USING THE SAME AS RUBBER BASE MATERIAL**
KAUTSCHUKZUSAMMENSETZUNG UND GOLFBALL MIT DER KAUTSCHUKZUSAMMENSETZUNG ALS KAUTSCHUKGRUNDMATERIAL
COMPOSITION DE CAOUTCHOUC ET BALLE DE GOLF UTILISANT CELLE-CI COMME MATÉRIAU DE BASE EN CAOUTCHOUC

(30) Priority: 14.01.2005 JP 2005007557
(43) Date of publication of application: 24.10.2007
(73) Proprietor: Ube Industries, Ltd., Ube-shi, Yamaguchi-ken 755-8633 (JP)
(72) Inventor: OKAMOTO, Naomi Chiba Petrochemical Factory, Ichihara-shi, Chiba 2908550 (JP); ISHIGUCHI, Kouji Chiba Petrochemical Factory, Ichihara-shi, Chiba, 2908550 (JP)
(74) Representative: Bublak, Wolfgang
(86) International application number: PCT/JP2006/300073
(87) International publication number: WO 2006/075555

(56) References cited:
- JP-A- 61 073 707
- JP-A- 2002 265 680
- JP-A- 2004 043 714
- JP-A- 2005 008 817
- JP-A- 2006 016 518
- DATABASE WPI Week 200233 Thomson Scientific, London, GB; AN 2002-285270 XP002552022 & JP 2001 302730 A (UBE IND LTD) 31 October 2001 (2001-10-31)
- DATABASE WPI Week 200107 Thomson Scientific, London, GB; AN 2001-052922 XP002552021 & JP 2000 256507 A (UBE IND LTD) 19 September 2000 (2000-09-19)
- DATABASE WPI Week 200454 Thomson Scientific, London, GB; AN 2004-554491 XP002552023 & CN 1 468 871 A (UBE IND LTD) 21 January 2004 (2004-01-21)

## Description

### BACKGROUND OF THE INVENTION

### Field of the Invention

The present invention relates to a rubber composition for use in golf balls; tires including tire outer parts such as treads and sidewalls, and tire inner parts such as carcasses, belts, and beads; industrial products such as rubber vibra-tion isolators, belts, hoses, and rubber vibration suspensions; and shoes such as men's shoes, women's shoes, and sports shoes. More particularly, it relates to a golf ball rubber composition for use in golf balls, and a golf ball.

### Description of the Related Art

Polybutadiene for use in golf balls as rubber base material is required to have high hardness, high rebound and impact resistance as well as excellent processability. Patent Document 1 (JP-A 2004-43714) discloses a technology that provides improvements in high hardness, high rebound, and impact resistance. In general, however, a higher Mooney viscosity improves the rebound but worsens the processability. In contrast, a wider molecular weight distribution improves the processability but worsens the rebound. In a word, there is an antinomy between the improvements in processability and rebound. For the purpose of achieving the compatibility of processability and rebound, improvements in the property of polybutadiene have been tried and various proposes have been provided. For example, Patent Document 2 (JP-A 63-275356) and Patent Document 3 (JP-A 2-177973) disclose polybutadienes having a high Mooney viscosity and a wide molecular weight distribution and synthesized in the presence of a Ni-based catalyst.

Further methods are disclosed to employ two types of rubber with different rubber physical properties. For example, Patent Document 4 (JP-B 6-80123) discloses polybutadiene rubber with a low Mooney viscosity and polybutadiene rubber with a high Mooney viscosity.

Patent Document JP 2005 008817 A discloses a polybutadiene composition comprising (A) 10-70 parts by weight of polybutadiene that includes (a) 1-9 wt. % of insoluble fraction in boiling n-hexane that melts at >= 1.80 °C and (b) 99-91 wt.% of boiled n-hexane-soluble fraction that has Mooney viscosity (ML) of 35-50 and (B) 90-30 parts by weight of diene rubber other than (A) and includes (C) 20-80 parts by weight of rubber-reinforcing agent based on 100 parts by weight of the rubber components of (A)+(B).

Patent Document JP 2001 302730 A discloses a polybutadiene rubber comprising 1-30 wt.% of a boiling n-hexane insoluble component mainly composed of a syndiotactic 1,2- polybutadiene having a reduced specific viscosity of 0.5-4 and 70-99 wt.% of a boiling n-hexane soluble component mainly composed of a high cis-1,4- polybutadiene, the boiling n-hexane insoluble component having a melting point of 130-175 °C.

### SUMMARY OF THE INVENTION

There are still needs for those having much higher rebound and more excellent processability than the prior art. Therefore, there is an object to provide a rubber composition suitable for golf balls having high hardness and high rebound and excellent in extrusion processability, and a golf ball using the rubber composition as rubber base material.

To achieve the above object the present invention relates to a rubber composition, which comprises a rubber component containing (A) 1-70 weight parts of polybutadiene rubber having a Mooney viscosity (ML) of 35-50 and composed of (a) 1-9 weight % of a boiled n-hexane insoluble fraction having a melting point of 180 °C or higher and (b) 99-91 weight % of a boiled n-hexane soluble fraction, and (B) 99-30 weight parts of diene-based rubber other than (A); and a crosslinking coagent (C) mixed therein. The present invention also relates to a golf ball including the rubber composition as rubber base material.

In the rubber composition according to the present invention, preferably, the boiled n-hexane insoluble fraction (a) comprises syndiotactic polybutadiene, having a reduction viscosity of 1.0-3.0, and the boiled n-hexane soluble fraction (b) has a molecular weight distribution (Weight average molecular weight (Mw)/Number average molecular weight (Mn)) of 3.0-5.0. Preferably, the boiled n-hexane soluble fraction (b) has a Mooney viscosity of 25-40 and a cis content of 95 % or higher.

Also in the rubber composition according to the present invention, preferably, the diene-based rubber (B) has a molecular weight distribution (Weight average molecular weight (Mw)/ Number average molecular weight (Mn)) of 2.5-5.0.

Thus, the present invention is possible to provide a rubber composition suitable for golf balls having high hardness and high rebound and excellent in extrusion processability, and a golf ball using the rubber composition as rubber base material.

### BRIEF DESCRIPTION OF THE DRAWINGS

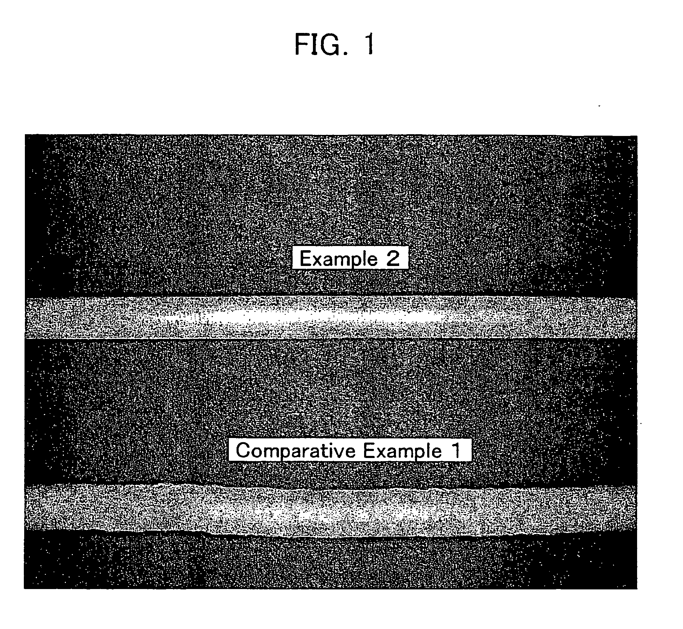

Fig. 1 shows photographs of a rubber composition according to Example 2 and a rubber composition according to Comparative Example 1.

### DETAILED DESCRIPTION OF THE INVENTION

In the rubber composition according to the present invention, the (A) composition of the polybutadiene composition is substantially composed of the boiled n-hexane insoluble fraction (a) and the boiled n-hexane soluble fraction (b), and the composition (A) has a Mooney viscosity (ML) of 35-50.

In this case, the boiled n-hexane **insoluble** fraction is referred to as a portion that is collected as an insoluble fraction when polybutadiene rubber is refluxed in the boiled n-hexane. On the other hand, the boiled n-hexane **soluble** fraction is referred to as a portion that is dissolved in n-hexane when polybutadiene rubber is refluxed in the boiled n-hexane.

The boiled n-hexane insoluble fraction has a proportion of 1-9 weight %, and preferably 2-7 weight %. A proportion of the boiled n-hexane insoluble fraction less than the above range causes a problem because it worsens the processability. On the other hand, a proportion of the boiled n-hexane insoluble fraction more than the above range is not preferable because it may increase the mixture viscosity and worsen the processability.

The boiled n-hexane insoluble fraction mainly comprises syndiotactic-1,2-polybutadiene itself, and/or polybutadiene having a syndiotactic-1,2 structure as a major structure. It has a melting point of 180 °C or higher, preferably 190 °C or higher. Preferably, it has a reduction viscosity of 1.0-3.0.

The boiled n-hexane soluble fraction mainly comprises high cis-1,4-polybutadiene itself, and/or polybutadiene having a high cis-1,4 structure as a major structure.

Preferably, the boiled n-hexane soluble fraction has a Mooney viscosity (ML₁₊₄) of 25-40 at 100 °C. A Mooney viscosity below 25 is not preferable because it lowers the rebound. On the other hand, a Mooney viscosity above 40 causes a problem because it increases the mixture viscosity and worsens the processability.

Preferably, the boiled n-hexane soluble fraction has a 5% toluene solution viscosity (T-cp) of 70-250 at 25 °C.

The 5% toluene solution viscosity (T-cp) of the boiled n-hexane soluble fraction at 25 °C and the Mooney viscosity (ML₁₊₄) have a ratio (T-cp/ML) of 2-5, preferably 2-3. A ratio below 2 is not preferable because it lowers the rebound. On the other hand, a ratio above 5 causes a problem because it increases the cold flow property of raw rubber.

Preferably, the boiled n-hexane soluble fraction has a weight average molecular weight (Mw) of 450-600 thousands. Preferably, the boiled n-hexane soluble fraction has a number average molecular weight (Mn) of 100-300 thousands. Preferably, the weight average molecular weight (Mw) and the number average molecular weight (Mn) have a ratio (Mw/Mn) of 3.0-5.0. A ratio below 3 is not preferable because it may worsen the processability. A ratio above 5 causes a problem because it lowers the rebound.

Preferably, the boiled n-hexane soluble fraction has a cis content of 95 % or higher, more preferably 97 % or higher. A content below 95 % is not preferable because it worsens the rebound.

The polybutadiene (A) component can be produced through a two-stage polymerization method. The two-stage polymerization method is a method of polymerizing 1,3-butadiene through two separate stages. In the first stage, cis-1,4 polymerization is implemented to obtain high cis-1,4-polybutadiene (boiled n-hexane soluble fraction). Then, without halting the polymerization, a catalyst for syndiotactic-1,2 polymerization is subsequently added to synthesize syndiotactic-1,2-polybutadiene (boiled n-hexane insoluble fraction), resulting in polybutadiene rubber including the boiled n-hexane insoluble fraction dispersed in the boiled n-hexane soluble fraction. In contrast, the syndiotactic-1,2 polymerization may be implemented in the first stage, and the cis-1,4 polymerization in the second stage.

As the cis-1,4 polymerization catalyst and the syndiotactic-1,2 polymerization catalyst, those publicly known can be employed, respectively.

Examples of the cis-1,4 polymerization catalyst include Ziegler-Natta catalysts such as diethyl aluminum chloride-cobalt-based catalysts, trialkyl aluminum-boron trifluoride-nickel-based catalysts, diethyl aluminum chloride-nickel-based catalysts, and triethyl aluminum tetraiodotitanium-based catalysts; and lanthanoid element-based catalysts such as triethyl aluminum-organic acid neodymium-Lewis acid-based catalysts.

Examples of the syndiotactic-1,2 polymerization catalyst include soluble cobalt-organoaluminum compound-carbon disulfide-based catalysts, and **soluble cobalt-organoaluminum compound-carbon disulfide-based catalysts-nitrile compound-based catalysts.** Polymerization conditions such as polymerization degrees and polymerization catalysts can be set appropriately in accordance with publicly known methods.

The polybutadiene (A) component may also be produced through other blending methods. A blending method comprises previously polymerizing syndiotactic-1,2-polybutadiene and high cis-1,4-polybutadiene separately and then blending them. A solution blending method comprises blending them in solution states. A melt blending method comprises melting and kneading them using a Banbury mixer or an extrusion kneader. Alternatively, high cis-1,4-polybutadiene or syndiotactic-1,2-polybutadiene may be blended in the polybutadiene rubber synthesized through the two-stage polymerization method.

In the rubber composition according to the present invention, preferably, the diene-based rubber (B) has a molecular weight distribution (Weight average molecular weight (Mw)/Number average molecular weight (Mn)) of 2.5-5.0. Available examples of the diene-based rubber include polybutadiene and others such as natural rubber, isoprene rubber and styrene butadiene rubber.

The component (A) and the component (B) have proportions of (A) 1-70 weight parts and (B) 99-30 weight parts. A proportion below 1 of the component (A) is not preferable because it worsens the extrusion processability. A proportion above 70 of the component (A) is not preferable because it lowers the rebound.

In the rubber composition according to the present invention, the crosslinking coagent mixed in the rubber composition is preferably one of monovalent or divalent metallic salts of α,β-ethylenic unsaturated carboxylic acid. Specific examples thereof include zinc diacrylate, basic zinc methacrylate, and zinc dimethacrylate. These metallic salts of α,β-ethylenic unsaturated carboxylic acid may be directly mixed with the rubber composition in general methods. In another method, a metal oxide such as zinc oxide is previously kneaded in the rubber composition. In addition, an α,β-ethylenic unsaturated carboxylic acid such as acrylic acid and methacrylic acid is added and kneaded in the rubber composition to achieve the reaction of the α,β-ethylenic unsaturated carboxylic acid with the metal oxide in the rubber composition. As a result, a metallic salt of α,β-ethylenic unsaturated carboxylic acid is obtained.

The mixed amount of the crosslinking coagent preferably falls within 10-50 weight parts on the basis of 100 weight parts of the rubber base material. If the mixed amount of the crosslinking coagent is smaller than the above range, crosslinking can not proceed sufficiently, resulting in lowered rebound performance, shortened carries, and worsened durability. If the mixed amount of the crosslinking coagent is larger than the above range, the compression becomes too large and accordingly the feeling of impact worsens.

It is preferable in the present invention that, in addition to the crosslinking coagent, peroxides are mixed as essential components in the rubber composition that will configure a rubbery portion.

The peroxides act as initiators for crosslinking, grafting and polymerizing the rubber and the crosslinking coagent. Suitable specific examples of the peroxides include dicumil peroxide, 1,1-bis(t-butylperoxy)3,3,5-trimethylcyclohexan.

The mixed amount of the peroxides falls within 0.2-5 weight parts on the basis of 100 weight parts of the rubber base material. If the mixed amount of the peroxides is smaller than the above range, crosslinking and so forth can not proceed sufficiently, resulting in lowered rebound performance, shortened carries, and worsened durability. If the mixed amount of the peroxides is larger than the above range, over-cure (over crosslinking) occurs, resulting in increased fragileness and worsened durability.

The rubber composition may be mixed with zinc oxide also acting as a crosslinking auxiliary when the crosslinking coagent is zinc diacrylate or zinc methacrylate. Further, a filling agent such as barium sulfate, an anti-oxidant, and an additive such as zinc stearate may be mixed, if required.

### EXAMPLES

Examples of the rubber composition according to the present invention will be described below specifically.

A melting point was determined from a peak temperature on a heat absorption curve measured at a temperature elevation rate of 10 °C/min using a differential scanning calorimeter (DSC).

A reduction viscosity was measured by dissolving 0.2 g of the boiled n-hexane insoluble fraction in 100 ml of o-dichlorobenzene using a Uberode viscometer at a temperature of 135 °C.

A microstructure was identified in the infrared absorption spectrum analysis. The microstructure was calculated from the absorbed intensity ratio at cis 740 cm⁻¹, trans 967 cm⁻¹, and vinyl 910 cm⁻¹.

A molecular weight (Mw, Mn) was measured in a GPC method: HLC-8220 (available from Toso Inc.) and calculated by standard polystyrene conversion.

Mooney viscosity (ML₁₊₄, 100 °C) of a raw rubber and mixture was measured based on JIS 6300.

A mixture Mooney viscosity was evaluated with an index relative to 100 of Comparative Example 1. The smaller the index, the lower the viscosity becomes and the better the processability.

Extrusion processability was evaluated by extruding using a MPT (processability tester available from Monsanto Inc.) under the condition with a die (D = 1.5 mm, L/D = 1) at a temperature of 80 °C, and 50/sec.

A die swell was calculated from a sectional ratio between the die and the extrusion and estimated by an index relative to 100 of Comparative example 1. The smaller the index, the better the dimension stability becomes.

A surface condition was checked by visually observing the extrusion and determined on the basis of Excellent (O), Melt fracture (Δ), and Heavy melt fracture (x).

Hardness was measured in accordance with a measuring method stipulated under JIS-K6253 using a durometer (type D) and estimated by an index relative to 100 of Comparative example 1. The larger the index, the higher the hardness becomes.

A 10% modulus/tensile strength was measured in accordance with a measuring method stipulated under JIS-K6251 using a No. 3 dumbbell at a tensile rate of 500 mm/min and estimated by an index relative to 100 of Comparative example 1. The larger the index, the higher and better the 10% modulus/tensile strength becomes.

A rebound was measured in accordance with a measuring method stipulated under JIS-K6251 in a tripso test and estimated by an index relative to 100 of Comparative example 1. The larger the index, the higher and better the rebound becomes.

### (Examples 1-6, Comparative examples 1-4)

Polybutadienes shown in Table 1 were employed to produce rubber compositions according to Examples 1-6 and Comparative examples 1-4. The respective measured results are shown in Table 2. In addition, photographs taken from a rubber composition according to Example 2 and a rubber composition according to Comparative Example 1 are shown in Fig. 1.

**Table 1**

| Trade Name | | BR230 (*1) | BR700 (*2) | VCR800 (*3) | VCR450 (*4) | SPB150 (*5) |
|---|---|---|---|---|---|---|
| Mooney Viscosity (ML) | | 38 | 38 | 40 | 39 | - |
| (*6) | (*8) | - | - | 5.3 | 3.8 | 100 |
| | (*9) | - | - | 201 | 201 | 150 |
| | (*10) | - | - | 2.1 | 2.1 | 1.2 |
| (*7) | ML | 38 | 38 | 34 | 35 | - |
| | Mw (10⁴) | 63 | 51 | 50 | 51 | - |
| | Mn (10⁴) | 14 | 18 | 13 | 13 | - |
| | Mw/Mn | 4.5 | 2.8 | 3.8 | 3.9 | - |
| | Cis (%) | 98 | 98 | 98 | 98 | - |

| | | | | | | |
|---|---|---|---|---|---|---|
| (*1) BR230: High cis polybutadiene rubber from Ube (*2) BR700: High cis polybutadiene rubber from Ube (*3) VCR 800: Reinforced polybutadiene rubber from Ube (*4) VCR 450: Reinforced polybutadiene rubber from Ube (*5) SBP150: Labo-polymerized SPB of JP-A 2004-43714 (*6) Boiled n-hexane insoluble fraction (*7) Boiled n-hexane soluble fraction (*8) Proportion (wt. %) (*9) Melting Point (°C) (*10) Reduction Viscosity | | | | | | |

**Table 2**

| | Examples | | | | | | Comparative Examples | | | |
|---|---|---|---|---|---|---|---|---|---|---|
| | 1 | 2 | 3 | 4 | 5 | 6 | 1 | 2 | 3 | 4 |
| BR230 | 97 | 90 | 70 | 50 | - | 70 | 100 | - | 20 | 90 |
| BR700 | - | - | - | - | 90 | - | - | - | - | - |
| VCR800 | 3 | 10 | 30 | 50 | 10 | - | - | 100 | 80 | - |
| VCR450 | - | - | - | - | - | 30 | - | - | - | - |
| SPB150 | - | - | - | - | - | - | - | - | - | 10 |
| (*11) | 100 | 100 | 101 | 102 | 101 | 100 | 100 | 103 | 103 | 112 |
| (*12) | 98 | 97 | 95 | 93 | 97 | 96 | 100 | 89 | 92 | 98 |
| | △ | ○ | ○ | ○ | ○ | ○ | × | ○ | ○ | Δ |
| (*13) | 100 | 102 | 105 | 107 | 112 | 105 | 100 | 109 | 107 | 119 |
| (*14) | 101 | 104 | 108 | 112 | 121 | 106 | 100 | 127 | 121 | 145 |
| (*15) | 100 | 103 | 105 | 102 | 100 | 101 | 100 | 107 | 105 | 101 |
| (*16) | 100 | 100 | 99 | 98 | 100 | 99 | 100 | 94 | 95 | 94 |

| | | | | | | | | | | |
|---|---|---|---|---|---|---|---|---|---|---|
| (*11) Mixture ML (*12) Extrusion Swell Surface condition (*13) Hardness (*14) 10% Modulus (*15) Tensile strength (*16) Rebound | | | | | | | | | | |

Other mixed agents:

| | |
|---|---|
| Zinc acrylate | 30 Actor ZA, Kawaguchi Chemical |
| ZnO | 20 Zinc oxide |
| DCP | 1 Dicumil peroxide |
| | 155 °C × 15 min press vulcanization |

As obvious from the above, the rubber compositions according to Examples 1-6 have high hardness and high rebound and are excellent in extrusion processability. To the contrary, the rubber composition according to Comparative Example 1 is extremely poor in surface condition of the extrusion as shown in Fig. 1 and the rubber compositions according to Comparative Examples 2-4 have lower rebound, respectively.

## Claims

1. A rubber composition, comprising:
a rubber component containing
A. 1-70 weight parts of polybutadiene rubber having a Mooney viscosity (ML) of 35-50 and composed of (a) 1-9 weight % of a boiled n-hexane insoluble fraction having a melting point of 180 °C or higher and (b) 99-91 weight % of a boiled n-hexane soluble fraction, and
B. 99-30 weight parts of diene-based rubber other than (A); and
a crosslinking coagent (C) mixed therein,
wherein the boiled n-hexane insoluble fraction (a) comprises syndiotactic polybutadiene, having a reduction viscosity of 1.0-3.0, and wherein the boiled n-hexane soluble fraction (b) has a molecular weight distribution (Weight average molecular weight (Mw)/ Number average molecular weight (Mn)) of 3.0-5.0.

2. The rubber composition according to claim 1, wherein the boiled n-hexane soluble fraction (b) has a Mooney viscosity of 25-40 and a cis content of 95 % or higher.

3. The rubber composition according to any one of claim 1 or 2, wherein the diene-based rubber (B) has a molecular weight distribution (Weight average molecular weight (Mw)/ Number average molecular weight (Mn)) of 2.5-5.0.

4. A golf ball including the rubber composition according to any one of claims 1, 2 and 4 as a rubber base material.

## Patentansprüche

1. Kautschukzusammensetzung, umfassend:
einen Kautschukbestandteil, enthaltend
A. 1-70 Gewichtsteile Polybutadienkautschuk mit einer Mooney-Viskosität (ML) von 35-50 und zusammengesetzt aus (a) 1-9 Gew.-% einer in gekochtem n-Hexan unlöslichen Fraktion mit einem Schmelzpunkt von 180°C oder höher und (b) 99-91 Gew.-% einer in gekochtem n-Hexan löslichen Fraktion und
B. 99-30 Gew.-% eines anderen Kautschuks auf Dien-Basis als (A); und
ein darin eingemischtes Vemetzungs-Coagens (C),
wobei die in gekochtem n-Hexan unlösliche Fraktion (a) syndiotaktisches Polybutadien mit einer Reduktionsviskosität von 1,0-3,0 umfasst und wobei die in gekochtem n-Hexan lösliche Fraktion (b) eine Molekulargewichtsverteilung (Gewichtsmittel des Molekulargewichts (Mw)/Zahlenmittel des Molekulargewichts (Mn)) von 3,0-5,0 aufweist.

2. Kautschukzusammensetzung nach Anspruch 1, wobei die in gekochtem n-Hexan lösliche Fraktion (b) eine Mooney-Viskosität von 25-40 und einen cis-Gehalt von 95% oder höher aufweist.

3. Kautschukzusammensetzung nach einem der Ansprüche 1 oder 2, wobei der Kautschuk auf Dien-Basis (B) eine Molekulargewichtsverteilung(Gewichtsmittel des Molekulargewichts (Mw)/Zahlenmittel des Molekulargewichts (Mn)) von 2,5-5,0 aufweist.

4. Golfball, einschließend die Kautschukzusammensetzung nach einem der Ansprüche 1, 2 und 4 als Kautschukgrundmaterial.

## Revendications

1. Composition de caoutchouc, comprenant :
un composant caoutchouc contenant
A. 1 à 70 parties en poids d'un caoutchouc butadiène ayant une viscosité Mooney (ML) de 35 à 50 et composé (a) de 1 à 9 % en poids d'une fraction insoluble dans le n-hexane à ébullition, ayant un point de fusion de 180°C ou plus, et (b) de 99 à 91 % en poids d'une fraction soluble dans le n-hexane à ébullition, et
B. 99 à 30 parties en poids d'un caoutchouc à base de diène autre que (A) ; et
un co-agent de réticulation (C) qui y est mélangé,
où la fraction (a) insoluble dans le n-hexane à ébullition comprend un polybutadiène syndiotactique, ayant une viscosité réduite de 1,0-3,0, la fraction (b) soluble dans le n-hexane à ébullition ayant une distribution des masses moléculaires (masse moléculaire moyenne en masse (Mw)/masse moléculaire moyenne en nombre (Mn)) de 3,0-5,0.

2. Composition de caoutchouc selon la revendication 1, dans laquelle la fraction (B) soluble dans le n-hexane à ébullition a une viscosité Mooney de 25 à 40 et une teneur en cis de 95 % ou plus.

3. Composition de caoutchouc selon l'une quelconque des revendications 1 ou 2, dans laquelle le caoutchouc à base de diène (B) a une distribution des masses moléculaires (masse moléculaire moyenne en masse (Mw)/masse moléculaire moyenne en nombre (Mm)) de 2,5-5,0.

4. Balle de golf, comprenant la composition de caoutchouc selon l'une quelconque des revendications 1, 2 et 4 en tant que matériau de base caoutchouteux.
